# EUROPÄISCHE PATENTANMELDUNG

(11) **EP 1 022 916 A1**
(43) Veröffentlichungstag der Anmeldung: **26.07.2000**
(21) Anmeldenummer: 99810034.1
(22) Anmeldetag: 19.01.1999
(51) Int. Cl.: H04Q 7/26, H04M 3/42, H04M 1/72

(54) **Verfahren für den kombinierten Betrieb eines leitungsgebundenen Telefons und eines zugeordneten schnurlosen Mobiltelefons sowie Anordnung zur Durchführung des Verfahrens**

(71) Anmelder: Ascom AG, 3000 Bern 14 (CH)
(72) Erfinder: Thüring, Willi, 4535 Hubersdorf (CH); Giacometto, Mario, 2545 Selzach (CH)
(74) Vertreter: Roshardt, Werner Alfred, Dipl.-Phys.

(57) **Zusammenfassung**

Bei einem Verfahren für den kombinierten Betrieb eines an einer PBX (10) angeschlossenen leitungsgebundenen Telefons (40) und eines zugeordneten schnurlosen Mobiltelefons (50), welches zur Kommunikation über eine Funk-Schnittstelle mit einer an der PBX (10) angeschlossenen Basisstation (22, 24, 26) ausgebildet ist, werden Benutzerdaten (130) des leitungsgebundenen Telefons (40) und seines zugeordneten Mobiltelefons (50) in einer Speichervorrichtung (110) der PBX (10) gemeinsam verwaltet. Durch das erfindungsgemässe Verfahren wird ein einfaches, selbstverständliches Wechseln zwischen dem Telefonieren mit dem leitungsgebundenen Telefon (40) und dem Mobiltelefon (50) ermöglicht.

## Beschreibung

### Technisches Gebiet

Die vorliegende Erfindung betrifft ein Verfahren für den kombinierten Betrieb eines an einer PBX angeschlossenen leitungsgebundenen Telefons und eines zugeordneten schnurlosen Mobiltelefons sowie eine Anordnung zur Durchführung des Verfahrens.

### Stand der Technik

Neuere Fernmeldeanlagen für die firmenweite Telekommunikation in grösseren Firmen umfassen üblicherweise eine PBX (Private Branch Exchange, auch Telekommunikationsanlage oder Nebenstellanlage genannt), an welche über Drahtleitungen sowohl ein oder mehrere ortsfeste Telefone (sog. leitungsgebundene Telefone) als auch eine oder mehrere zur Kommunikation über Funk-Schnittstellen mit schnurlosen Mobiltelefonen ausgebildete Basisstationen angeschlossen sind. Das die Mobiltelefone und die Basisstationen umfassende Schnurlossystem kann als Teilsystem der firmenweiten Telekommunikationsanlage beispielsweise nach dem DECT-Standard (Digital Enhanced Cordless Telecommunication) ausgebildet sein.

Das Arbeiten an heutigen Arbeitsplätzen erfordert oft pro Person oder Benutzer sowohl ein ortsfestes, leitungsgebundenes Telefon als auch ein schnurloses Mobiltelefon. Dabei ist das ortsfeste Telefon bevorzugterweise als Tischapparat mit vielen Komfortfunktionen ausgebildet, wie beispielsweise einer Freisprecheinrichtung, einer Lauthöreinrichtung, einer Vielzahl von Funktionstasten, einer alphanumerischen Tastatur, einem grossen Display usw. Demgegenüber sind für das Mobiltelefon kleine Abmessungen und eine möglichst grosse Autonomie (bei begrenzter Batteriekapazität) wünschenswert, so dass es üblicherweise nur mit einer vergleichsweise geringen Anzahl an Funktionstasten und einem kleinen Display versehen ist. Der Benutzer eines leitungsgebundenen Telefons und eines Mobiltelefons wünscht sich eine kombinierte Benutzung der beiden Geräte derart, dass möglichst viele Vorteile der einzelnen Geräte zum Tragen kommen, ohne dass gleichzeitig deren Nachteile in Kauf genommen werden müssen.

Um mindestens einen Teil der Komfortfunktionen eines leitungsgebundenen Komforttelefons auch bei einem zugeordneten schnurlosen Mobiltelefon nutzen zu können, welches mit einem Sendeempfänger für eine erste bidirektionale Funkübertragungsstrecke zu einer Basisstation ausgerüstet ist, wird in der deutschen Gebrauchsmusterschrift DE G 92 15 403.4 vorgeschlagen, am Mobiltelefon und am Komforttelefon Sender und Empfänger für eine weitere bidirektionale Funkübertragungsstrecke zwischen dem Mobiltelefon und dem Komforttelefon anzuordnen. Über die weitere bidirektionale Übertragungsstrecke, die als Infrarot-Übertragungsstrecke ausgebildet sein kann, kann das Mobiltelefon Daten zur Steuerung von bloss an der Komfortstation vorhandenen Betätigungs- oder Funktionselementen an diese übertragen. Dazu ist es jedoch erforderlich, das Mobiltelefon mit Sendern und Empfängern für zwei verschiedene Übertragungsstrecken (zur Basisstation und zum Komforttelefon) auszurüsten. Dies erweist sich als nachteilig hinsichtlich der Komplexität und des Preises des Mobiltelefons.

In der amerikanischen Patentschrift US A 5 524 045 wird ein System für den kombinierten Betrieb eines an einer PBX angeschlossenen leitungsgebundenen Komforttelefons und eines zugeordneten schnurlosen Mobiltelefons beschrieben. Die Zuordnung des Mobiltelefons zu seinem zugeordneten Komforttelefon ist in einem Speicher der PBX festgehalten. Das Mobiltelefon ist mit einem Sendeempfänger zur Kommunikation über eine bidirektionale Funk-Schnittstelle mit einer an der PBX angeschlossenen Basisstation versehen. Eine weitere Funkübertragungsstrecke zum Komforttelefon ist nicht erforderlich. Das Kommunikationssystem gemäss US A 5 524 045 weist hinsichtlich der Bedienung der beiden Telefone den Nachteil auf, dass zwischen dem Mobiltelefon und dem Komforttelefon deutlich abgegrenzte Funktionalitäten bestehen. Die beiden Telefone sind im wesentlichen nach wie vor für einen unabhängigen Betrieb ausgebildet, wobei durch die speichermässige Zuordnung in der PBX gewisse Erleichterungen für einen kombinierten Betrieb erreicht werden. So wird in Abhängigkeit davon, ob das Mobiltelefon in einer als Ladestation ausgebildeten Auflagemulde beim Komforttelefon abgelegt ist oder nicht, eine Anrufumleitung zum Komforttelefon bzw. zum Mobiltelefon initialisiert, wobei der Ladekontakt gleichzeitig als Umschalter für die Anrufweiterleitung dient.

### Darstellung der Erfindung

Der Erfindung liegt die Aufgabe zugrunde, ein Verfahren für den kombinierten Betrieb eines an einer PBX angeschlossenen leitungsgebundenen Telefons und eines zugeordneten schnurlosen Mobiltelefons anzugeben, das ein einfaches, selbstverständliches Wechseln zwischen dem Telefonieren mit dem leitungsgebundenen Telefon und dem Mobiltelefon ermöglicht.

Die Lösung der Aufgabe ist Gegenstand der unabhängigen Patentansprüche.

Gemäss der Erfindung werden bei einem Verfahren für den kombinierten Betrieb eines an einer PBX angeschlossenen leitungsgebundenen Telefons und eines zugeordneten schnurlosen Mobiltelefons, welches zur Kommunikation über eine Funk-Schnittstelle mit einer an der PBX angeschlossenen Basisstation ausgebildet ist, Benutzerdaten des leitungsgebundenen Telefons und seines zugeordneten Mobiltelefons in einer Speichervorrichtung der PBX gemeinsam verwaltet.

Als Benutzerdaten sind in der vorliegenden Beschreibung und den Patentansprüchen diejenigen Daten zu verstehen, die funktionell einem einzelnen Benutzer zuzuweisen sind. Beispiele von Benutzerdaten sind die zuletzt gewählten Nummern, die Nummern von Anrufern, die den Gerufenen nicht erreicht haben, die Privatkartei eines Benutzers usw.

Die gemeinsame Datenverwaltung bedeutet, dass beide Telefone für Veränderungen und/oder Abfragen der gemeinsam verwalteten Benutzerdaten auf die gleichen Daten zugreifen. Die gemeinsam verwalteten Benutzerdaten des leitungsgebundenen Telefons und seines zugeordneten Mobiltelefons stehen somit stets aktualisiert in gleicher Weise an beiden Telefonapparaten zur Verfügung, und zwar unabhängig davon, welcher der beiden Apparate zuletzt benutzt wurde und eine Aktualisierung dieser Daten bewirkt hat. Die gemeinsame Verwaltung der Benutzerdaten bewirkt, dass den beiden Telefonapparaten eine gemeinsame Bedien- und Anzeigephilosophie zugrunde gelegt wird. Dadurch wird eine benutzerfreundliche, weitgehend identische Bedienung der beiden Apparate ermöglicht.

Durch die gemeinsame Verwaltung der Benutzerdaten in einer Speichervorrichtung der PBX wird eine hohe Datensicherheit für die Benutzerdaten gewährleistet. Aufgrund der überragenden Bedeutung der PBX für den Betrieb einer Fernmeldeanlage wird im allgemeinen durch geeignete Massnahmen (Notstromversorung usw.) dafür gesorgt, dass die PBX eine sehr hohe Betriebssicherheit aufweist, welche höher ist als die Betriebssicherheit der einzelnen Telefonapparate. Weil beim erfindungsgemässen Verfahren die gemeinsam verwalteten Benutzerdaten in einer Speichervorrichtung der PBX gespeichert werden, profitieren sie von der hohen Betriebssicherheit der PBX. Im Gegesatz dazu hängt bei bei der üblichen Speicherung der Benutzerdaten in der Speichervorrichtung der Telefonapparate selbst die Datensicherheit der Benutzerdaten von der Betriebssicherheit der einzelnen Telefonapparate ab.

Es versteht sich von selbst, dass sich das erfindungsgemässe Verfahren für den kombinierten Betrieb eines an einer PBX angeschlossenen leitungsgebundenen Telefons und eines zugeordneten schnurlosen Mobiltelefons hervorragend für einen Einnummerndienst eignet, bei welchem dem Benutzer des leitungsgebundenen Telefons und des zugeordneten Mobiltelefons eine einzige Rufnummer zugewiesen wird und Gespräche für diesen Benutzer stets automatisch an das jeweils geeignete Telefon geroutet werden. Zu diesem Zweck kann das leitungsgebundene Telefon mit einer Auflagemulde für sein zugeordnetes Mobiltelefon versehen sein, in welcher ein Umschalter integriert ist, um Anrufe zum leitungsgebundenen Telefon zu routen, wenn das Mobiltelefon in der Auflagemulde liegt. Das erfindungsgemässe Verfahren kann jedoch auch im Falle von einander zugeordneten Telefonen mit unterschiedlichen Rufnummern vorteilhaft angewendet werden.

Gemäss einer bevorzugten Ausführungsart der Erfindung wird nach der Eingabe einer Fernmeldenummer an einem beliebigen der beiden einander zugeordneten Telefone die eingegebene Fernmeldenummer in der Speichervorrichtung der PBX abgelegt. Anschliessend steht diese Fernmeldenummer beiden einander zugeordneten Telefonen zur Verfügung, so dass ein Benutzer der beiden Telefone für eine Wahlwiederholung von irgend einem der beiden Telefone aus auf diese Nummer zugreifen kann. Der Benutzer muss sich dann nicht mehr daran erinnern, von welchem der beiden Telefone aus er zuletzt einen oder mehrere Anrufe ausgeführt hat. Die zuletzt an einem oder beiden Apparaten eingegebenen Nummern stehen in gleicher Weise beiden Apparaten zur Verfügung.

Vorzugsweise wird die Nummer eines Anrufers, der ein beliebiges der beiden einander zugeordneten Telefone anruft, in der Speichervorrichtung der PBX abgelegt und gemeinsam verwaltet, so dass sie anschliessend zur späteren Beantwortung von unbeantworteten Anrufen oder zum Rückruf im Falle von bereits beantworteten Anrufen an beiden Telefonen zur Verfügung steht. Auf diese Weise ist es weiter möglich, dass der Benutzer, wenn er nicht am Arbeitsplatz ist und das Mobiltelefon bei sich hat, auf einfache Art Anrufe an sein zugeordnetes leitungsgebundenes Telefon beantworten kann.

Weiter wird bevorzugt, dass die laufenden Gebühren bei Anrufen von einem beliebigen der einander zugeordneten Telefone aus in der Speichervorrichtung der PBX aufsummiert und gemeinsam verwaltet werden, so dass sie anschliessend an beiden Telefonen angezeigt werden können. Dabei können die laufenden Gebühren für beide Telefone getrennt aufsummiert oder in einem einzigen gemeinsamen Gebührenspeicher zusammen aufsummiert werden.

Bei einer weiteren bevorzugten Ausführungart der Erfindung werden häufig zu wählenden Nummern von einem beliebigen der einander zugeordneten Telefone aus in einer Privatkartei in der Speichervorrichtung der PBX abgelegt werden, so dass sie anschliessend zum Zwecke des Anwählens der Nummern beiden Telefonen zur Verfügung stehen.

Gemäss einer andere Variante der Erfindung können Termindaten von einem beliebigen der einander zugeordneten Telefone aus in einem Terminspeicher in der Speichervorrichtung der PBX abgelegt werden, worauf anschliessend zu gegebener Zeit auf beiden Telefonen eine Terminerinnerungsfunktion ausgelöst wird.

Falls an der PBX Möglichkeiten zur Programmierung von Funktionen vorgesehen sind (z.B. zur Einrichtung von Anrufumleitungen), können die programmierten Funktionen in der Speichervorrichtung der PBX abgelegt und derart gemeinsam verwaltet werden, dass sie zum Aufrufen und Ausführen der Funktionen beiden Telefonen zur Verfügung stehen. Im Falle von Funktionen, die über die Tastatur von an der PBX angeschlossenen Telefonen programmierbar sind, können die an beiden einander zugeordneten Telefonen verfügbaren Funktionen vorzugsweise von einem beliebigen der beiden Telefone aus programmiert werden.

Gemäss einer weiteren bevorzugten Variante der Erfindung kann im Zuge der Konfiguration der PBX festgelegt werden, ob die Benutzerdaten eines leitungsgebundenen Telefons und eines Mobiltelefons in der Speichervorrichtung der PBX gemeinsam oder getrennt verwaltet werden. Dadurch können das leitungsgebundene Telefon und das Mobiltelefon wahlweise unabhängig voneinander (auf konventionelle Art) oder in einem kombinierten Betrieb gemäss der Erfindung betrieben werden.

Eine Anordnung zur Durchführung des erfindungsgemässen Verfahrens umfasst eine PBX, eine an der PBX angeschlossene Basisstation, ein an der PBX angeschlossenes leitungsgebundenes Telefon und ein diesem zugeordnetes schnurloses Mobiltelefon, welches zur Kommunikation über eine Funk-Schnittstelle mit der Basisstation ausgebildet ist. Das leitungsgebundene Telefon ist im Funk-Abdeckungsbereich einer Basisstation installiert, zu welcher das zugeordnete Mobiltelefon Zugang hat. Das Mobiltelefon kann in diesem Fall als Sprechhörer seines zugeordneten leitungsgebundenen Telefons ausgebildet sein.

Gemäss einer weiteren bevorzugten Ausführungsart der Erfindung ist das leitungsgebundene Telefon mit einem über ein Kabel angeschlossenen Sprechhörer versehen. Für den Fall, dass ein vertrauliches Telefongespräch möglichst abhörsicher geführt werden soll, kann dieses über den kabelgebundenen Sprechhörer geführt werden. Dadurch entfällt die Möglichkeit zum Abhören von Funksignalen, welche sonst beim Telefonieren über das Mobiltelefon ausgesendet werden.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsarten und Merkmalskombinationen ohne weiteres erkennbar, die jedoch immer noch innerhalb des Bereichs der vorliegenden Erfindung liegen.

### Kurze Beschreibung der Zeichnung

Die Zeichnungen stellen bevorzugte Ausführungsformen der vorliegenden Erfindung dar. Es zeigen:
- Fig. 1: eine schematische Darstellung eines Teils des Datenmodells für ein Verfahren gemäss einer bevorzugten Ausführungsform der Erfindung;
- Fig. 2: eine schematische Darstellung einer Anordnung zur Durchführung des Verfahrens mit dem Datenmodell aus Fig. 1.

### Wege zur Ausführung der Erfindung

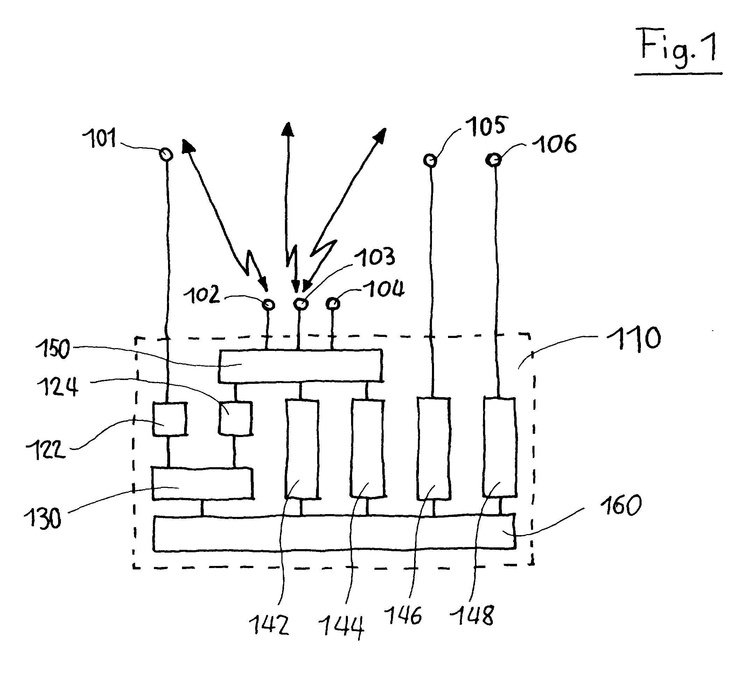

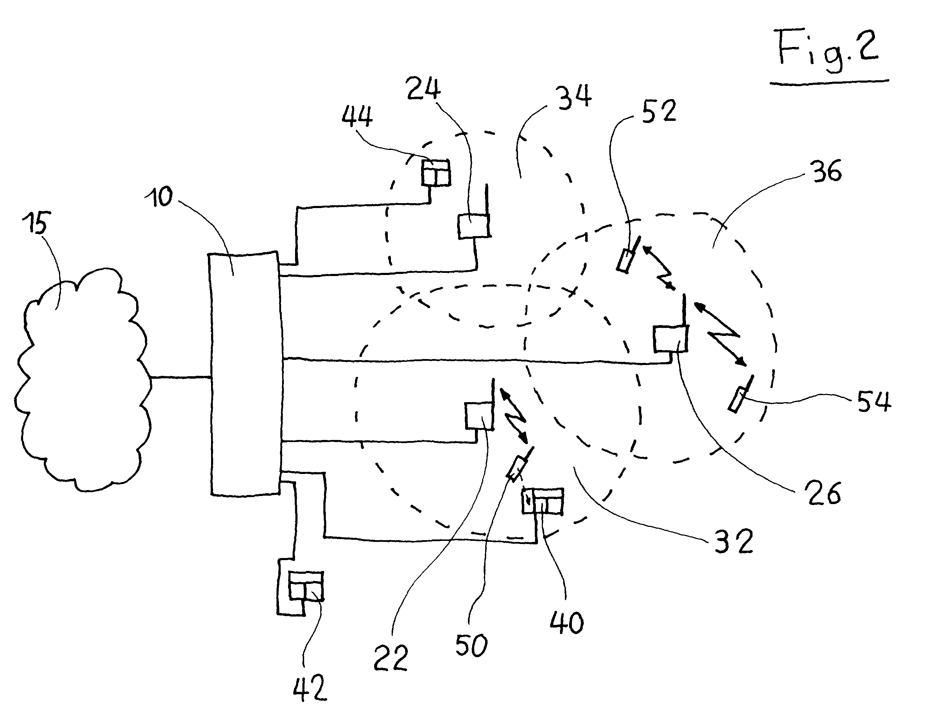

In der Figur 1 ist in einer vereinfachten schematischen Darstellung ein Teil des Datenmodells für ein Verfahren für den Betrieb einer Fernmeldeanlage gemäss einer bevorzugten Ausführungsform der Erfindung dargestellt. Die Figur 2 zeigt in einer vereinfachten schematischen Darstellung eine Anordnung zur Durchführung des Verfahrens mit dem Datenmodell aus der Figur 1.

Die in der Figur 2 dargestellte beispielhafte Anordnung umfasst eine PBX 10, drei Basisstationen 22, 24, 26, drei ortsfeste leitungsgebundene Telefone 40, 42, 44 und drei schnurlose Mobiltelefone 50, 52, 55. Die PBX 10 ist über eine Drahtleitung auf übliche Art an das internationale Fernmeldenetz 15 angeschlossen. An die PBX 10 sind über Drahtleitungen die drei ortsfesten Telefone 40, 42, 44 angeschlossen. Einem ersten 40 dieser leitungsgebundenen Telefone ist ein schnurloses Mobiltelefon 50 zugeordnet. Dieses erste leitungsgebundene Telefon 40 wird gemäss dem nachfolgend beschriebenen erfindungsgemässen Verfahren in einem kombinierten Betrieb zusammen mit seinem zugeordneten schnurlosen Mobiltelefon 50 betrieben. Die zwei anderen leitungsgebundenen Telefone 42, 44 werden auf gebräuchliche Art, unabhängig von weiteren Telefonapparaten, betrieben.

An die PBX 10 sind weiter die drei Basisstationen 22, 24, 26 angeschlossen, um Funkschnittstellen zu einer Vielzahl von schnurlosen Mobiltelefonen 50, 52, 54 zu schaffen. Die Funkschnittstellen sind in den Figuren durch Zick-Zack-Pfeile symbolisiert, während die Funk-Abdeckungsbereiche oder Zellen 32, 34, 36 der Basisstationen 22, 24, 26 in der Figur 2 mit unterbrochenen Linien dargestellt sind. Die Basisstationen 22, 24, 26 und die Mobiltelefone 50, 52, 54 bilden ein multizellulares Schnurlos-Telefonsystem (auch als "Cordless-Telephone-System" oder als "CT-System" bezeichnet), das im allgemeinen nach dem DECT-Standard betrieben wird. Innerhalb der Zellen 32, 34, 36 sind die schnurlosen Mobiltelefone 50, 52, 54 über Funk mit der PBX 10 verbunden und via diese an das Fernmeldenetz 15 angeschlossen. Das dem oben erwähnten leitungsgebundenen Telefon 40 zugeordnete Mobiltelefon 50 wird gemäss dem nachfolgend beschriebenen erfindungsgemässen Verfahren in einem kombinierten Betrieb zusammen mit seinem zugeordneten leitungsgebundenen Telefon 40 betrieben, während die beiden anderen der drei in der Figur 2 dargestellten Mobiltelefone 52, 54 auf konventionelle Art als schnurlose DECT-Handapparate 52, 54 betrieben werden.

Bei der in der Figur 2 dargestellten bevorzugten Ausführungsart der Erfindung kann das dem ersten leitungsgebundenen Telefon 40 zugeordnete Mobiltelefon 50 als Sprechhörer des leitungsgebundenen Telefons 40 verwendet werden, wobei das leitungsgebundene Telefon 40 über keinen weiteren (z.B. über ein Kabel angeschlossenen) Sprechhörer verfügt. Das leitungsgebundene Telefon 40 ist mit den bei heutigen Tischapparaten üblichen Komfortfunktionen wie einer Freisprecheinrichtung, einer Lauthöreinrichtung, einer Vielzahl von Funktionstasten, einer alphanumerischen Tastatur und einem grossen Display ausgerüstet. Das leitungsgebundene Telefon 40 ist weiter mit einer Auflagemulde für sein zugeordnetes Mobiltelefon 50 versehen, wobei die Auflagemulde als Ladestation für das Mobiltelefon 50 ausgebildet ist. Zudem ist das leitungsgebundene Telefon 40 im Funk-Abdeckungsbereich 32 einer an der PBX 10 angeschlossenen Basisstation 22 installiert und das zugeordnete Mobiltelefon 50 ist mit einem Sendeempfänger versehen, der zur Kommunikation über eine bidirektionale Funk-Schnittstelle mit dieser Basisstation 22 (und auch zur Kommunikation mit den übrigen an der PBX 10 angeschlossenen Basisstationen 24, 26) ausgebildet ist. Die Kommunikation vom Mobiltelefon 50 aus erfolgt über die Funk-Schnittstelle zur PBX 10, an der auch das leitungsgebundene Telefon 40 angeschlossen ist. Eine weitere Übertragungsstrecke zwischen dem Mobiltelefon 50 und dem zugeordneten leitungsgebundenen Telefon 40 ist weder erforderlich noch vorhanden.

Wenn das Mobiltelefon 50 im gleichen Raum benutzt wird, in dem sich auch sein zugeordnetes leitungsgebundene Telefon 40 befindet, kann das Mobiltelefon 50 als Sprechhörer des leitungsgebundenen Telefons 40 (mit einem imaginären Kabel) betrachtet werden. Wird das Mobiltelefon 50 an einer von diesem Raum entfernten Stelle benutzt, ist es als übliches Mobiltelefon eines CT-Systems zu betrachten. Es besteht jedoch kein Unterschied zwischen dem Betrieb des Mobiltelefons 50 in der unmittelbaren Umgebung seines zugeordneten leitungsgebundenen Telefons 40 und dem Betrieb an einem entfernten Standort.

In der Figur 1 ist in einer vereinfachten schematischen Darstellung das Modell des in einer Speichervorrichtung 110 der PBX 10 gespeicherten Teils der teilnehmerbezogenen Daten für die in der Figur 2 dargestellte Anordnung dargestellt. Die (logischen) Datenblöcke sind in der Figur 1 als Rechtecke mit durchgezogenen Linien dargestellt, und die vertikalen Verbindungslinien zwischen den Datenblöcken sowie zu den Anschlüssen 101, 102, 103, 104, 105, 106 der PBX 10 stellen (logische) Datenzugriffsmöglichkeiten dar. Das mit unterbrochenen Linien umrandete Gebiet in der Figur 1 stellt die Speichervorrichtung 110 der PBX 10 dar. Als Teilnehmer einer PBX 10 ist im folgenden irgend ein an der PBX 10 angeschlossenes Fernmeldeendgerät zu verstehen, wie beispielsweise ein leitungsgebundenes Telefon 40, 42, 44, ein schnurloses Mobiltelefon 50, 52, 54, ein Telefaxgerät usw.

Die in der Speichervorrichtung 110 der PBX 10 gespeicherten teilnehmerbezogenen Daten lassen sich aufgliedern in Systemdaten 160, die für eine Vielzahl von Teilnehmern gemeinsam gelten (z.B. eine firmenweite, gemeinsame Kurzwahlliste), in Benutzerdaten 130 (gemäss der weiter oben angegebenen Definition Daten, die funktionell einem einzelnen Benutzer zuzuweisen sind) und in gerätespezifische Daten, die jedem Teilnehmer separat zuzuweisen sind. Beispiele für die gerätespezifischen Daten, die meistens technisch orientiert sind, sind Gerätekonfigurationsdaten wie der Kontrast bei einem Komfortapparat, die ausgewählte Rufmelodie bei einem Telefon usw.

Das leitungsgebundene Telefon 40, welchem das schnurlose Mobiltelefon 50 zugeordnet ist und welches in einem kombinierten Betrieb zusammen mit seinem zugeordneten Mobiltelefon 50 betrieben wird, hat über seinen Anschluss 101 an der PBX 10 Zugriff auf einen Datenblock 122 mit seinen gerätespezifischen Daten, einen Datenblock 130 mit den Benutzerdaten und einen Datenblock 160 mit den Systemdaten. Der Zugriff zum Datenblock 122 mit den gerätespezifischen Daten ist exklusiv, d.h. es haben keine weiteren an der PBX 10 angeschlossenen Teilnehmer Zugriff auf diesen Datenblock 122. Auf den Datenblock 130 mit den Benutzerdaten kann nebst dem leitungsgebundenen Telefon 40 noch sein zugeordnetes Mobiltelefon 50 zugreifen, um eine gemeinsame Verwaltung dieser Daten zu ermöglichen. Sonst haben keine weiteren Teilnehmer Zugriff auf diesen Datenblock 130, ausser bei der Konfiguration der Anlage. Auf den Datenblock 160 mit den Systemdaten haben sämtliche der an der PBX 10 angeschlossene Teilnehmer Zugriff.

Jedes der beiden anderen der in der Figur 1 dargestellten leitungsgebundenen Telefone 42, 44 hat über seinen PBX-Anschluss 105, 106 exklusiven Zugriff auf je einen Datenblock 146, 148, der sowohl die gerätespezifischen Daten als auch die dem Telefon 42, 44 zugewiesenen Benutzerdaten umfasst. Die beiden leitungsgebundenen Telefone 42, 44 haben weiter Zugriff auf den sämtlichen an der PBX 10 angeschlossenen Teilnehmern zugänglichen Datenblock 160 mit den Systemdaten.

Weil die Basisstationen 22, 24, 26 und die Mobiltelefone 50, 52, 54 der in der Figur 2 dargestellten Anordnung ein multizelluläres Schnurlos-Telefonsystem bilden, bei dem jedes Mobiltelefon 50, 52, 54 in jeder Zelle 32, 34, 36 über die jeweilige Basisstation 22, 24, 26 der Zelle 32, 34, 36 Zugang zur PBX 10 hat, erfolgt der Zugriff eines Mobiltelefons 50, 52, 54 auf seine teilnehmerbezogenen Daten in der PBX-Speichervorrichtung 110 über den PBX-Anschluss 102, 103, 104 der Basisstation 22, 24, 26, in deren Zelle 32, 34, 46 sich das Mobiltelefon 50, 52, 54 befindet, und über eine Mobiltelefon-Schaltstelle 150, welche aufgrund einer Mobiltelefon-Identifikationsnummer die Datenverbindung zu den teilnehmerbezogenen Daten des Mobiltelefons 50, 52, 54 in der Speichervorrichtung 110 der PBX 10 herstellt. Auf diesem Weg hat das dem leitungsgebundenen Telefon 40 zugeordnete und in einem kombinierten Betrieb zusammen mit diesem betriebene Mobiltelefon 50 exklusiven Zugriff auf einen Datenblock 124 mit seinen gerätespezifischen Daten, gemeinsamen Zugriff (zusammen mit seinem zugeordneten leitungsgebundenen Telefon 40) auf den Datenblock 130 mit den gemeinsam verwalteten Benutzerdaten und Zugriff auf den Datenblock 160 mit den Systemdaten.

Die beiden anderen Mobiltelefone 52, 54, welche auf konventionelle Art als schnurlose DECT-Handapparate 52, 54 betrieben werden, haben über den PBX-Anschluss 103 der Basisstation 26, in deren Zelle 36 sie sich befinden, sowie über die Mobiltelefon-Schaltstelle 150 exklusiven Zugriff auf je einen Datenblock 142, 144, der sowohl die gerätespezifischen Daten als auch die dem jeweiligen Mobiltelefon 52, 54 zugewiesenen Benutzerdaten umfasst. Weiter haben die beiden Mobiltelefone 52, 54 Zugriff auf den sämtlichen an der PBX 10 angeschlossenen Teilnehmern zugänglichen Datenblock 160 mit den Systemdaten.

In der Figur 1 nicht dargestellt sind die lokalen gerätebezogenen Daten, die in üblicher Weise in Speichervorrichtungen der einzelnen Geräte gespeichert sind. Je nach Typ der Endgeräte ist es möglich, diese Daten (z.B. Bildschirmanzeige, gepufferte Daten der Wahl, usw.) entweder im Endgerät oder im Datenblock 122 mit den gerätespezifischen Daten abzulegen.

Gemäss dem erfindungsgemässen Verfahren für den kombinierten Betrieb des leitungsgebundenen Telefons 40 und seines zugeordneten schnurlosen Mobiltelefons 50 werden die Benutzerdaten im Datenblock 130, zu dem das leitungsgebundene Telefon 40 und sein zugeordnetes Mobiltelefon 50 gemeinsam Zugriff haben, gemeinsam verwaltet. Wenn ein Benutzer des leitungsgebundenen Telefons 40 und seines zugeordneten Mobiltelefons 50 vom leitungsgebundenen Telefon 40 aus oder vom zugeordneten Mobiltelefon 50 aus eine Fernmeldenummer anwählt und ein Gespräch ausführt, so wird die angewählte Fernmeldenummer im Datenblock 130 mit den gemeinsam verwalteten Benutzerdaten abgelegt. Die anfallenden Gesprächsgebühren werden laufend zu einem Gebühren-Sammelspeicher in diesem Datenblock 130 hinzuaddiert. Auf die im Datenblock 130 mit den gemeinsam verwalteten Benutzerdaten abgelegten Daten können anschliessend sowohl das leitungsgebundene Telefon 40 als auch sein zugeordnetes Mobiltelefon 50 zugreifen, um diese Daten auf einem Gerätedisplay anzuzeigen und/oder eine Wahlwiederholung auszuführen, und zwar unabhängig davon, von welchem der beiden Telefonapparate 40, 50 diese Daten stammen und/oder zuletzt verändert wurden. Der Benutzer muss sich somit nicht mehr daran erinnern, von welchem Apparat 40, 50 aus er zuletzt einen oder mehrere Anrufe ausgeführt hat. Die gemeinsam verwalteten Benutzerdaten 130 stehen in gleicher Weise beiden Apparaten 40, 50 zur Verfügung.

In analoger Weise können Daten über unbeantwortete Anrufe, Daten für Rufweiterleitungen, Daten für Anrufumleitungen, Daten für eine Alarmauslösung, Termindaten, die Privatkartei eines Benutzers, Kurzmeldungen und weitere Benutzerdaten von den beiden einander zugeordneten Telefonapparaten gemeinsam verwaltet werden. Weiter können programmierbare Funktionen (beispielsweise die Funktion "Ruhe vor dem Telefon" zum Stummschalten von Telefonapparaten während einer programmierbaren Zeitspanne) gemeinsam verwaltet und z.B. einer Funktionstaste auf dem leitungsgebundenen Telefon und einer Funktionstaste auf dem Mobiltelefon zugewiesen werden.

Zusammenfassend ist festzustellen, dass durch die Erfindung ein Verfahren für den kombinierten Betrieb eines an einer PBX 10 angeschlossenen leitungsgebundenen Telefons 40 und eines zugeordneten schnurlosen Mobiltelefons 50 angegeben wird, das ein einfaches, selbstverständliches Wechseln zwischen dem Telefonieren mit dem leitungsgebundenen Telefon 40 und dem Mobiltelefon 50 ermöglicht.

## Patentansprüche

1. Verfahren für den kombinierten Betrieb eines an einer PBX (10) angeschlossenen leitungsgebundenen Telefons (40) und eines zugeordneten schnurlosen Mobiltelefons (50), welches zur Kommunikation über eine Funk-Schnittstelle mit einer an der PBX (10) angeschlossenen Basisstation (22, 24, 26) ausgebildet ist, dadurch gekennzeichnet, dass Benutzerdaten (130) des leitungsgebundenen Telefons (40) und seines zugeordneten Mobiltelefons (50) in einer Speichervorrichtung (110) der PBX (10) gemeinsam verwaltet werden.

2. Verfahren nach Anspruch 1, dadurch gekennzeichnet, dass nach der Eingabe einer anzuwählenden Fernmeldenummer an einem beliebigen der beiden einander zugeordneten Telefone (40, 50) die eingegebene Fernmeldenummer in der Speichervorrichtung (110) der PBX (10) abgelegt wird, wobei sie anschliessend zum Zwecke von Wahlwiederholungen beiden Telefonen (40, 50) zur Verfügung steht.

3. Verfahren nach Anspruch 1 oder 2, dadurch gekennzeichnet, dass nach dem Eintreffen eines Anrufs für ein beliebiges der beiden einander zugeordneten Telefone (40, 50) die Fernmeldenummer des Anrufers in der Speichervorrichtung (110) der PBX (10) abgelegt wird, wobei sie anschliessend zum Zwecke einer Anrufbeantwortung beiden Telefonen (40, 50) zur Verfügung steht.

4. Verfahren nach einem der Ansprüche 1 bis 3, dadurch gekennzeichnet, dass die laufenden Gebühren bei Anrufen von einem beliebigen der einander zugeordneten Telefone (40, 50) aus in der Speichervorrichtung (110) der PBX (10) aufsummiert werden, wobei sie anschliessend zum Zwecke der Gebührenanzeige beiden Telefonen (40, 50) zur Verfügung stehen.

5. Verfahren nach einem der Ansprüche 1 bis 4, dadurch gekennzeichnet, dass häufig zu wählenden Nummern von einem beliebigen der einander zugeordneten Telefone (40, 50) aus in einer Privatkartei in der Speichervorrichtung (110) der PBX (10) abgelegt werden, wobei sie anschliessend zum Zwecke des Anwählens der Nummern beiden Telefonen (40, 50) zur Verfügung stehen.

6. Verfahren nach einem der Ansprüche 1 bis 4, dadurch gekennzeichnet, dass Termindaten von einem beliebigen der einander zugeordneten Telefone (40, 50) aus in einem Terminspeicher in der Speichervorrichtung (110) der PBX (10) abgelegt werden, wobei anschliessend zu gegebener Zeit auf beiden Telefonen (40, 50) eine Terminerinnerungsfunktion ausgelöst wird.

7. Verfahren nach einem der Ansprüche 1 bis 6, dadurch gekennzeichnet, dass von einem beliebigen der einander zugeordneten Telefone (40, 50) aus programmierbare Funktionen in der Speichervorrichtung (110) der PBX (10) abgelegt werden, wobei sie anschliessend zum Zwecke des Aufrufens und Ausführens der Funktionen beiden Telefonen (40, 50) zur Verfügung stehen.

8. Anordnung zur Durchführung des Verfahrens nach einem der Ansprüche 1 bis 7, gekennzeichnet durch eine PBX (10), eine an der PBX (10) angeschlossene Basisstation (22, 24, 26), ein an der PBX (10) angeschlossenes leitungsgebundenes Telefon (40) und ein diesem zugeordnetes schnurloses Mobiltelefon (50), welches zur Kommunikation über eine Funk-Schnittstelle mit der Basisstation (22, 24, 26) ausgebildet ist.

9. Anordnung nach Anspruch 8, dadurch gekennzeichnet, dass das leitungsgebundene Telefon (40) im Funk-Abdeckungsbereich (32) einer Basisstation (22) installiert ist, zu welcher das zugeordnete Mobiltelefon (50) Zugang hat.

10. Anordnung nach Anspruch 9, dadurch gekennzeichnet, dass das Mobiltelefon (50) als Sprechhörer seines zugeordneten leitungsgebundenen Telefons (40) ausgebildet ist.
